# FASCICULE DE BREVET EUROPEEN

(11) **EP 1 315 343 B1**
(45) Date de publication et mention de la délivrance du brevet: **17.08.2011**
(21) Numéro de dépôt: 02079740.3
(22) Date de dépôt: 14.11.2002
(51) Int. Cl.: H04L 12/56, H04Q 3/52

(54) **Dispositif de commutation muni de moyens de test intégrés**
Vermittlungsvorrichtung mit integrierten Prüfmitteln
Switching device with integrated test means

(30) Priorité: 23.11.2001 FR 0115175
(43) Date de publication de la demande: 28.05.2003
(73) Titulaire: NXP B.V., 5656 AG Eindhoven (NL)
(72) Inventeur: Gloaguen, Gilbert, 75008 Paris (FR); Burg, Olivier, 75008 Paris (FR); Fahs, Bassem, 75008 Paris (FR)
(74) Mandataire: Williamson, Paul Lewis

(56) Documents cités:
- EP-A- 0 229 433
- US-A- 5 809 221

## Description

L'invention concerne les circuits intégrés dédiés aux transmissions à haut débit munis de moyens de test RF (Radio Frequency) intégrés. En particulier, elle concerne un dispositif de commutation comportant une pluralité d'entrées et de sorties reliées par des points d'interconnexion formant une matrice de commutation pilotée par un organe de contrôle pour aiguiller vers lesdites sorties des signaux émis sur lesdites entrées, le dispositif comportant des moyens de test intégrés commandés par ledit organe de contrôle pour tester le fonctionnement desdits points de connexion.

L'invention concerne aussi circuit intégré comportant un tel dispositif. Elle concerne enfin un autocommutateur d'un système de transmissions par liaisons optiques comportant un tel dispositif.

L'invention a de nombreuses applications notamment dans les systèmes de transmissions par liaisons optiques. Elle est particulièrement avantageuse dans les applications de commutation de paquets à haut débits.

Les circuits intégrés fonctionnant à haut débit, pouvant aller jusqu'à plusieurs Giga bits par seconde, nécessitent des outils de test appropriés. Il est en effet difficile, au niveau du test en production, d'injecter depuis l'extérieur dans les circuits des signaux à des fréquences si élevées.

Le brevet européen publié sous le numéro EP 229 433 décrit un dispositif de test d'un circuit logique combinatoire et un circuit intégré comportant un tel dispositif. Le dispositif est muni de moyens de test intégrés permettant de tester le circuit en production, c'est-à-dire permettant de tester le fonctionnement de chaque point de connexion d'une matrice de commutation. Ces moyens comportent un générateur de signaux de test pour générer des signaux de test prédéterminés et un détecteur pour détecter si les signaux de test émis sur les entrées du dispositif de commutation sont correctement reçus sur les sorties.

L'utilisation d'un seul couple générateur / détecteur comme prévu dans le brevet cité ci-dessus comporte certains inconvénients. Les chemins parcourus par les signaux de test depuis le générateur de signaux de test jusqu'à l'entrée sélectionnée du circuit à tester d'une part et depuis la sortie correspondante jusqu'au détecteur de signaux d'autre part sont relativement longs pour des transmissions RF. Dans le pire des cas, le chemin parcouru est de l'ordre de trois fois le coté du circuit de part et d'autre, i.e. en amont et en aval du circuit. Cette longueur de trajet est considérable pour des transmissions RF et peut être à l'origine de pertes dommageables pour les performances du circuit. Un autre inconvénient est que cette configuration de test implique que les chemins en sens inverse, i.e. en amont et en aval du circuit, doivent être tracés parallèlement les uns le long des autres jusqu'à se croiser parfois en fonction des contraintes du traçage. Les lignes de transmission parallèles et en sens inverse ainsi que les croisements de lignes ont également tendance à introduire des perturbations dans les transmissions RF. Ces perturbations sont préjudiciables pour les performances du circuit. Lors du fonctionnement en mode de test, les mesures effectuées peuvent être fortement altérées du fait de ces perturbations, ce qui réduit la fiabilité du test réalisé.

Un objet de l'invention est de fournir un dispositif de commutation muni de moyens de test intégrés qui ne comporte pas les inconvénients du dispositif connu.

Pour cela, il est prévu un dispositif du genre mentionné dans le paragraphe introductif remarquable en ce que les moyens de test intégrés comportent :
- un premier générateur pour générer une première séquence de test prédéterminée sur une première partie desdites entrées,
- un deuxième générateur pour générer une deuxième séquence de test prédéterminée sur une deuxième partie desdites entrées, les générateurs étant alimentés par un même signal d'horloge,
- un premier détecteur pour détecter si lesdites première ou deuxième séquences de test sont correctement reçues sur une première partie desdites sorties et
- un deuxième détecteur pour détecter si lesdites première ou deuxième séquences de test sont correctement reçues sur une deuxième partie desdites sorties.

Cette configuration des moyens de test sépare les entrées et les sorties en deux parties. Chaque générateur délivre une partie des entrées et chaque détecteur reçoit une partie des sorties. Ces moyens de test permettent de limiter les distances parcourues par les signaux RF sur les chemins de test de part et d'autre de la matrice de commutation et d'éviter que les chemins se croisent ou se longent.

La description suivante, donnée à titre d'exemple non limitatif pour illustrer comment l'invention peut être réalisée, est faite en regard des dessins ci-annexés, parmi lesquels :
- la figure 1 est un schéma fonctionnel pour illustrer un dispositif selon l'art antérieur,
- la figure 2 est un schéma fonctionnel pour illustrer schématiquement un exemple de dispositif selon l'invention,
- la figure 3 est un schéma fonctionnel pour illustrer un mode de réalisation particulier du dispositif selon la figure 2.

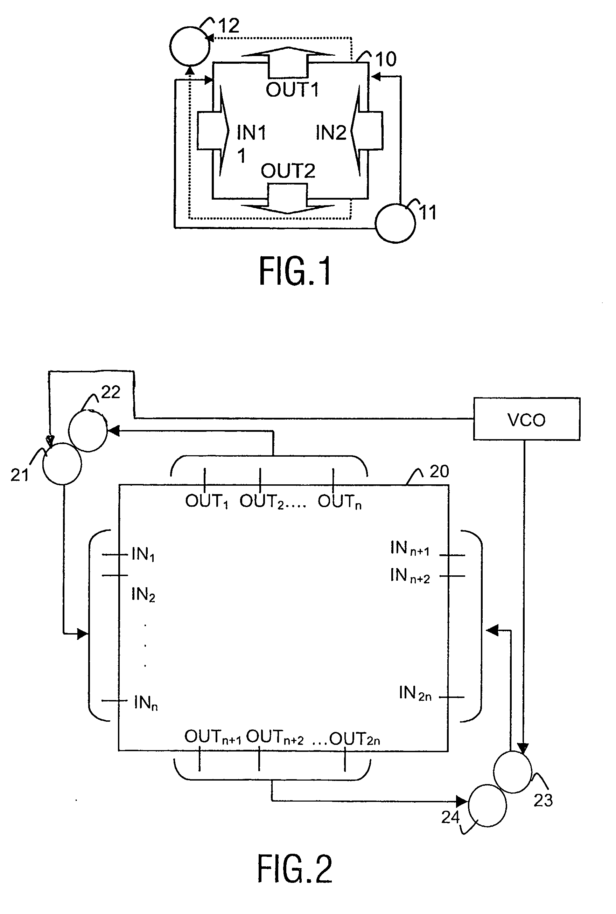

La figure 1 montre un exemple de dispositif de commutation selon l'art antérieur connu comportant des moyens de test intégrés, représenté par le brevet européen numéro 229 483. Le dispositif comporte une matrice de commutation 10 comportant une pluralité d'entrées IN1 et IN2 disposées horizontalement sur deux cotés opposés de la matrice et une pluralité de sorties OUT1 et OUT2 disposées verticalement sur les deux autres cotés de la matrice. La pluralité d'entrées et de sorties est schématisée par une seule flèche entrante et sortante, respectivement, par coté de la matrice. La matrice de commutation permet de relier chaque entrée à chaque sortie de la matrice par un point de connexion (non représenté). Des moyens de test intégrés sont prévus pour contrôler le fonctionnement de chaque point de connexion de la matrice. Les moyens de test comprennent un générateur de signaux de test RF 11 et un détecteur de signaux 12 disposés à proximité de deux coins opposés de la matrice de commutation et reliés aux entrées et aux sorties par des chemins de transmission RF. Le générateur 11 est prévu pour générer une séquence de test prédéterminée sur des entrées de la matrice sélectionnées selon un programme de test prédéfini. Un dispositif de contrôle (non représenté) permet de programmer les séquences de test et de sélectionner l'entrée et la sortie correspondant à chaque point de connexion à tester. Le détecteur 12 est prévu pour détecter si la séquence de test est (correctement) reçue sur la sortie sélectionnée. La figure 1 montre que la somme des longueurs des chemins de transmission à parcourir par les signaux de test RF est de l'ordre de longueur du périmètre de la matrice de commutation pour chaque point de connexion à tester. De plus, les chemins peuvent se croisent et se longer sur une partie substantielle du chemin à parcourir, ce qui est susceptible de perturber le fonctionnement de la matrice en introduisant des interférence ou du bruit lorsque les signaux RF sont transmis à des fréquences élevées de l'ordre du Giga Hertz.

La figure 2 montre un exemple de réalisation d'un dispositif selon l'invention permettant de remédier aux inconvénients du dispositif connu. La figure 2 illustre de façon très schématique un exemple dispositif de commutation comportant une matrice de commutation 20 carrée du type 2n x 2n, n étant un indice entier, munie d'une pluralité d'entrées, notées IN₁ à IN₂ₙ, et de sorties, notées OUT₁ à OUT₂ₙ. L'invention s'applique également à des matrices rectangles. Selon l'application considérée, chaque entrée et sortie peut comprendre 2 composantes différentielles. Le dispositif comporte des moyens de test intégrés comportant un premier couple générateur 21 / détecteur 22 et un deuxième couple générateur 23 / détecteur 24, reliés entre eux par des moyens de génération d'horloge, par exemple du type VCO (de l'anglais Voltage Controlled Oscillator) qui délivrent un signal d'horloge périodique. Les moyens de génération d'horloge VCO sont prévus pour synchroniser au moins les deux générateurs sur une même base de temps, de manière à ce qu'à chaque front d'horloge, le signal généré change d'état selon une séquence de test prédéterminée. La séquence de test prédéterminée peut être différente d'un générateur à l'autre, du moment que les deux générateurs sont synchronisés. Le générateur du premier couple 21 est prévu pour émettre des séquences de test RF prédéterminées sur une partie seulement des entrées possibles, i.e. par exemple, les entrées IN₁ à INₙ, de manière à limiter la longueur du chemin RF à parcourir à une seule fois la longueur d'un coté de la matrice. Le détecteur du premier couple 22 est prévu pour détecter les signaux reçus par une partie seulement des sorties, i.e. par exemple les sorties OUT₁ à OUTₙ, indépendamment des entrées sur lesquelles les signaux reçus ont été émis. Le rôle du détecteur est de vérifier si le point de connexion considéré fonctionne correctement à la fréquence d'utilisation, par exemple 12,5 Gbit/s. Pour cela, le détecteur détecte si la séquence reçue sur la sortie sélectionnée correspondant au point de connexion à tester est bien identique à la séquence émise sur l'entrée correspondante. De préférence, cette séquence connue est régénérée localement au niveau du détecteur puis comparée à la séquence reçue pour déterminer si les séquences sont identiques et en déduire si le point de connexion considéré fonctionne normalement. De façon symétrique, le générateur 23 et le détecteur 24 du deuxième couple sont prévus pour générer et détecter, respectivement, les signaux émis et reçus sur l'autre partie des entrées et des sorties, notées INₙ₊₁ à IN₂ₙ et OUTₙ₊₁ à OUT₂ₙ, respectivement. Chaque générateur et chaque détecteur d'un couple donné pouvant émettre ou recevoir des signaux à destination ou en provenance de n'importe quelle entrée ou sortie, associée au même couple ou à l'autre couple de générateur / détecteur. Le détecteur peut en effet recevoir des signaux générés par l'un ou l'autre des générateurs de signaux RF. C'est pourquoi les deux générateurs doivent être synchronisés. Des moyens de contrôle (non représentés) permettent de programmer les séquences de test prédéterminées et de sélectionner les entrées et les sorties correspondant à chaque point de connexion à tester. Les signaux de test RF générés par les générateurs 21 et 23 peuvent être des signaux pseudo-aléatoires du type PRBS (de l'anglais Pseudo Random Bit Stream). Ces signaux et la façon de les générer sont bien connus. On pourra, par exemple, utiliser des séquences pseudo aléatoires de 2⁷-1 (127) états générés à partir d'un registre de 7 bascules et d'un OU exclusif. Des détails sur ces signaux sont décrits dans la littérature.

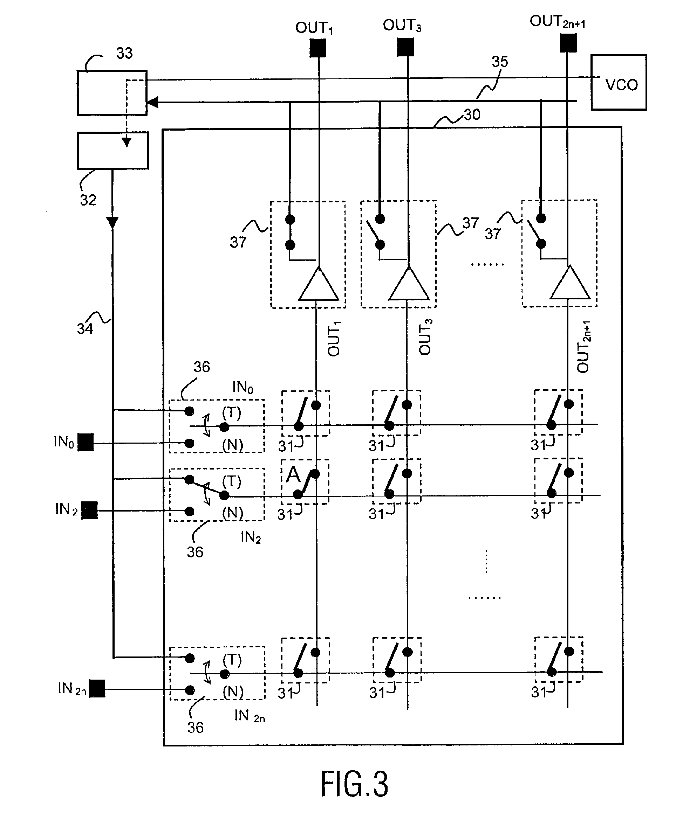

La figure 3 illustre de façon détaillée un exemple de réalisation du dispositif selon l'invention illustré schématiquement à la figure 2. Le dispositif comporte une matrice de commutation 30 comportant des points de connexion représentés par des commutateurs à tester 31. Seules les entrées paires et les sorties impaires de la matrice sont représentées sur la figure. Le dispositif comporte également un couple générateur 32 / détecteur 33 de signaux RF destiné à tester le fonctionnement des points de connexion de la matrice. Un seul couple de générateur / détecteur de signaux RF, correspondant aux entrée paires et aux sorties impaires, respectivement, est illustré sur la figure 3. Le générateur de signaux 32 est relié aux entrées paires notées IN₀, IN₂ ... IN₂ₙ par un chemin de transmission amont 34. Le détecteur de signaux 33 est relié aux sorties impaires notées OUT₁, OUT₃ ... OUT₂ₙ₊₁, par un chemin de transmission aval 35. Des dispositifs de commutation amonts 36 sont prévus à chaque entrée pour permettre de commuter la matrice 30 en mode de test (T) ou en mode de fonctionnement normal (N). Des dispositifs de commutation avals équivalents 37, comportant un interrupteur, sont prévus en aval sur chaque sortie impaire, pour passer du mode de test au mode de fonctionnement normal. Un dispositif central de contrôle (non représenté) permet de commander chaque dispositif de commutation amont 36 ou aval 37 pour passer d'un mode de fonctionnement à l'autre. Selon un programme de test prédéfini au niveau du dispositif de contrôle, un point de connexion, par exemple le point A représenté par le commutateur 31 reliant l'entrée IN₂ à la sortie OUT₁, est sélectionné pour être testé. Sous la commande du dispositif de contrôle, le commutateur 31 correspondant au point de connexion A sélectionné réalise un point de connexion entre l'entrée IN₂ et la sortie OUT₁ en vue de tester le fonctionnement de la connexion. Le dispositif de commutation amont 36 associé à l'entrée IN₂ ainsi que le dispositif de commutation aval 37 relié à la sortie OUT₁ sont placés en mode de test (interrupteur fermé) par l'organe de contrôle pour laisser passer les signaux de test en provenance du générateur 32 et à destination du détecteur 33. Le générateur de signaux 32 relié à l'entrée IN₂ transmet alors une séquence de test prédéfinie via le chemin de transmission amont 34. La séquence de test est transmise à la sortie OUT₁ par l'intermédiaire du commutateur amont 36, du commutateur à tester 31 et du commutateur aval 37. Puis, le signal de test parvient au détecteur 33 en suivant le chemin de transmission aval 35. Selon un mode de réalisation particulier, un générateur de signal d'horloge VCO délivre un signal d'horloge au générateur 32, via le détecteur 33.

## Revendications

1. Dispositif de commutation (20) comportant une pluralité d'entrées et de sorties reliées par des points d'interconnexion formant une matrice de commutation pilotée par un organe de contrôle pour aiguiller vers lesdites sorties des signaux émis sur lesdites entrées, le dispositif comportant des moyens de test intégrés commandés par ledit organe de contrôle pour tester le fonctionnement desdits points de connexion, **caractérisé en ce que** lesdits moyens de test intégrés comportent :
- un premier générateur (21) pour générer une première séquence de test prédéterminée sur une première partie desdites entrées,
- un deuxième générateur (23) pour générer une deuxième séquence de test prédéterminée sur une deuxième partie desdites entrées, les générateurs étant alimentés par un même signal d'horloge VCO
- un premier détecteur (22) pour détecter si lesdites première ou deuxième séquences de test sont correctement reçues sur une première partie desdites sorties et
- un deuxième détecteur (24) pour détecter si lesdites première ou deuxième séquences de test sont correctement reçues sur une deuxième partie desdites sorties.

2. Dispositif selon la revendication 1, dans lequel les générateurs et détecteurs sont placés à proximité des entrées et des sorties correspondantes.

3. Dispositif selon la revendication 2, dans lequel la matrice de commutation est une matrice rectangle, les première et deuxième parties des entrées et des sorties étant placées sur des cotés opposés, **caractérisé en ce que** les générateurs et détecteurs sont disposés par couples à proximité de deux coins opposés de la matrice.

4. Dispositif selon la revendication 3, dans lequel les signaux de test prédéterminés sont transmis depuis chaque générateur jusqu'aux entrées associées et depuis les sorties jusqu'à chaque détecteur associé sur des chemins de transmission passant par toutes les entrées associées à chaque générateur et toutes les sorties associées à chaque détecteur, les générateurs et détecteurs étant placés par couple autour de la matrice de commutation de sorte que chaque chemin de transmission soit de l'ordre de longueur d'un coté de ladite matrice.

5. Dispositif selon la revendication 3 ou 4, dans lequel des moyens générateur d'horloge destinés à alimenter les deux générateurs sont placés à proximité d'un coin libre.

6. Circuit intégré comportant un dispositif selon l'une des revendications 1 à 5.

7. Autocommutateur d'un système de transmissions par liaisons optiques comportant un dispositif selon l'une des revendications 1 à 5.

## Claims

1. Switching device (20) comprising a plurality of inputs and outputs connected by interconnection points forming a switching matrix being controlled by a control element for directing signals being emitted on said inputs to said outputs, the device comprising integrated testing means being controlled by said control element for testing the functionality of said interconnection points, **characterized in that** said integrated testing means comprise:
- a first generator (21) for generating a first predetermined test sequence on a first part of said inputs,
- a second generator (23) for generating a second predetermined test sequence on a second part of said inputs, the generators being supplied with a same clock signal (VCO),
- a first detector (22) for detecting whether said first or second test sequences have been received correctly on a first part of said outputs, and
- a second detector (24) for detecting whether said first or second test sequences have been received correctly on a second part of said outputs.

2. Device according to claim 1, in which the generators and detectors are placed in the proximity of the inputs and the corresponding outputs.

3. Device according to claim 2, in which the switching matrix is a rectangular matrix, the first and second parts of the inputs and outputs are placed on opposite sides, **characterized in that** the generators and detectors are disposed in pairs in the proximity of two opposite corners of the matrix.

4. Device according to claim 3, in which the predetermined test signals are transmitted from each generator to the associated inputs and from the outputs to each associated detector on transmission paths passing through all inputs associated with each generator and all outputs associated with each detector, the generators and detectors being placed in pairs around the switching matrix such that each transmission path is of a length order of one side of said matrix.

5. Device according to claim 3 or 4, in which clock generating means designated for supplying the two generators are placed in the proximity of a free corner.

6. Integrated circuit comprising a device according to one of the claims 1 to 5.

7. Branch exchange of a system of transmissions via optical connections comprising a device according to one of the claims 1 to 5.

## Patentansprüche

1. Vermittlungsvorrichtung (20) aufweisend eine Mehrzahl von Eingängen und Ausgängen, die durch Verbindungspunkte verknüpft sind, die eine Vermittlungsmatrix bilden, die durch ein Kontrollelement gesteuert wird, um Signale, die auf die Eingänge ausgegeben werden , zu den Ausgängen hinzuführen, wobei die Vorrichtung integrierte Testmittel aufweist, die durch das Kontrollelement gesteuert werden, um den Betrieb der Verbindungspunkte zu testen, **dadurch gekennzeichnet, dass** die integrierten Testmittel aufweisen:
- einen ersten Generator (21) zum Erzeugen einer ersten vorherbestimmten Testsequenz auf einem ersten Teil der Eingänge,
- einen zweiten Generator (23) zum Erzeugen einer zweiten vorherbestimmten Testsequenz auf einem zweiten Teil der Eingänge, wobei die Generatoren mit einem gleichen Taktsignal (VCO) versorgt werden,
- einen ersten Detektor (22) zum Detektieren, ob die ersten oder zweiten Testsequenzen korrekt auf einem ersten Teil der Ausgänge empfangen wurden, und
- einen zweiten Detektor (24) zum Detektieren, ob die ersten oder zweiten Testsequenzen korrekt auf einem zweiten Teil der Ausgänge empfangen wurden.

2. Vorrichtung gemäß Anspruch 1, in der die Generatoren und Detektoren in der Nähe der Eingänge und der entsprechenden Ausgänge platziert sind.

3. Vorrichtung gemäß Anspruch 2, in der die Vermittlungsmatrix eine rechteckige Matrix ist, wobei die ersten und zweiten Teile der Eingänge und Ausgänge auf gegenüberliegenden Seiten platziert sind, **dadurch gekennzeichnet, dass** die Generatoren und Detektoren paarweise in der Nähe von zwei gegenüberliegenden Ecken der Matrix angeordnet sind.

4. Vorrichtung gemäß Anspruch 3, in der die vorherbestimmten Testsignale von jedem Generator bis zu den zugehörigen Eingängen und von den Ausgängen bis zu jedem zugehörigen Detektor über Übertragungswege übermittelt werden, die durch alle Eingänge, die mit jedem Generator verbunden sind, und alle Ausgänge, die mit jedem Detektor verbunden sind, laufen, wobei die Generatoren und Detektoren paarweise um die Vermittlungsmatrix herum platziert sind, so dass jeder Übermittlungsweg von einer Längenordnung von einer Seite der Matrix ist.

5. Vorrichtung gemäß Anspruch 3 oder 4, in der die Takterzeugungsmittel, die zum Versorgen der zwei Generatoren vorgesehen sind, in der Nähe einer freien Ecke platziert sind.

6. Integrierte Schaltung, die eine Vorrichtung gemäß einem der Ansprüche 1 bis 5 aufweist.

7. Nebenstellenanlage eines Systems von Übermittlungen über optische Verbindungen, die eine Vorrichtung gemäß einem der Ansprüche 1 bis 5 aufweist.
